Europäisches Patentamt

European Patent Office

Office européen des brevets

(19)

(11) Veröffentlichungsnummer: **0 175 845**

**A2**

(12) # EUROPÄISCHE PATENTANMELDUNG

(21) Anmeldenummer: **85107046.6**

(22) Anmeldetag: **07.06.85**

(51) Int. Cl.⁴: **B 65 G 47/14**
**B 21 B 39/14**

(30) Priorität: **28.09.84 DE 3435635**

(43) Veröffentlichungstag der Anmeldung:
**02.04.86 Patentblatt 86/14**

(84) Benannte Vertragsstaaten:
**AT BE CH DE FR GB IT LI LU NL SE**

(71) Anmelder: **Th. Kieserling & Albrecht GmbH & Co.**
**Birkenweiher 66**
**D-5650 Solingen 1(DE)**

(72) Erfinder: **Tückmantel, Eberhardt**
**Rembrandweg 14**
**D-4010 Hilden(DE)**

(72) Erfinder: **Japs, Dieter, Dr.**
**Burger-Landstrasse 17**
**D-5650 Solingen(DE)**

(54) **Vorrichtung zum Vereinzeln von langen Drähten und Stangen.**

(57) Gezeigt ist eine Vereinzelungsvorrichtung (1) die aus einem auf einen Tisch aufgelegten Bund krummer Stäbe einzelne Stäbe (2) herauszieht und sie einer Verarbeitungsmaschine zuführt. Ein auf einem Tisch (3) abgelegtes Bund von Stäben wird von Transportbändern (23, 24, 25, 26, 27) einer Baugruppe (8) zugeführt. Die Baugruppe ergreift ein Stabende. Dies geschieht dadurch, daß ein oder mehrere eventuell übereinander liegende Stabenden, die vor einem Stopper (5) liegen über dessen Brust (45) hochgeschoben werden. Ein Querschieber (9) nimmt dann nur das oberste Stabende ab und zieht es zur Seite, über den Stopper (5) hinweg. Auf der anderen Seite des Stoppers (5) wird das vereinzelte Stabende von einem Transportrollenduo (20, 21) erfaßt und auf seiner gesamten Länge aus den übrigen Stäben des Bundes herausgezogen und ist somit vereinzelt.

Croydon Printing Company Ltd.

Th. Kieserling & Albrecht, GmbH & Co.     Solingen, den 06.09.84

Patentanmeldung                           Akte K 260

---

- 1 -

Vorrichtung zum Vereinzeln von langen Drähten und Stangen.

Die Erfindung bezieht sich auf eine Vorrichtung zum Vereinzeln von langen Drähten und Stangen gem. dem Oberbegriff von Anspruch 1. Im weiteren soll, stellvertretend für die hier betroffene Gattung von Werkstücken, von Stäben die Rede sein. Gemeint sind damit stets Stäbe von mehreren Metern Länge und wenigen Zentimetern in der größten Querschnittsabmessung.

Stäbe werden meist in Bunden auf ein Ablagerost gelegt. Die Vereinzelung der Stäbe bereitet deshalb Probleme, weil diese krumm sind und bereits beim Packen zu Bunden und auch beim Ablegen bzw. Öffnen der Bunde die Stäbe ihre präzise Längenausrichtung verlieren und teilweise schräg übereinanderliegen. Von da ausgehend ist eine automatische Vereinzelung der Stäbe schwierig. Erschwerend kommt hinzu, daß die Lage der Längsenden der Stäbe streut.

Es ist eine Vereinzelungsvorrichtung (DE-OS 1 452 072) bekannt, die aus einer sich nach unten zu verjüngenden Mulde eine Reihe von Stäben heraushebt. Die Mulde ist im Querschnitt etwa V-förmig ausgebildet. Vom Scheitelpunkt des V ausgehend schiebt sich ein Ausheber entlang dem einen der beiden Schenkel des V. Der Ausheber ragt dabei um Werkstückbreite in den Bereich der Mulde hinein. Die an der überstrichenen Muldenwand anliegenden Stäbe werden durch den sich nach oben bewegenden Ausheber über die Muldenwand gehoben und rollen oder rutschen einzeln über den Muldenrand auf eine als Rollgang ausgebildete, der Mulde benachbarte benachbarte Transportvorrichtung. Von dort werden sie in axialer Richtung zur Weiterverarbeitung transportiert. Die Mulde erfaßt die Werkstücke auf deren gesamter Länge. Es ist eine Reihe von Aushebern auf der gesamten Länge der Mulde verteilt.

0175845

- 2 -

Diese Vorrichtung gewährleistet keine Vereinzelung von in verwirrter Anordnung in die Mulde eingebrachten krummen Stäben. Wenn nicht die Stäbe auf ihrer gesamten Länge an der betreffenden Muldenwand anliegen und somit vom Ausheber erfaßt werden, fallen sie nicht über den Rand der Mulde sondern wieder in diese zurück oder hängen bei elastischen Werkstücken mit einem Ende über den Muldenrand und mit dem anderen Ende noch in der Mulde und blockieren damit die Vereinzelung der nachfolgenden Stäbe.

Der Erfindung liegt die Aufgabe zugrunde, eine Vereinzelungsvorrichtung zu finden, die von einem aufgelösten Bund von nicht geraden Stäben einzelne Stäbe separieren kann.

Diese Aufgabe wird erfindungsgemäß durch die kennzeichnenden Merkmale von Anspruch 1 gelöst. Die Transporteinrichtung stellt sicher, daß ein aufgelöstes Bund in dem Maße an die Vereinzelungsvorrichtung herangeführt wird, wie dies zur ständigen Versorgung der Vereinzelungsvorrichtung notwendig ist. Sie bietet gegenüber einer Mulde mit steilen Seitenwänden den Vorzug, daß nicht das ganze Bund mit seinem Gewicht gegen den Stopper drückt und die Arbeit des Aushebers erschwert. Die Stäbe können dosiert an die Vereinzelungsvorrichtung herangeführt werden. Wesentlich ist, daß die Stäbe zunächst maschinell und nur an einem Längsende vereinzelt werden. Die vollständige Vereinzelung kann dann durch einen zwischen dem in der Vereinzelung befindlichen Stab und den übrigen Stäben hindurchfahrenden "Finger" oder durch ein axiales Herausziehen des Stabes erfolgen.

Ein weiteres Merkmal der Erfindung ist darin zu sehen, daß durch den Querschieber von einer eventuell vom Ausheber erfaßten Mehrzahl von Stäben der oberste, von unten in die Ausnehmung eingeschoben und mit seinem erfaßten Ende quer

- 3 -

über den oberen Rand des Stoppers zur Seite bewegt wird. Damit ist gewährleistet, daß stets nur ein Stabende über den Stopper gehoben wird. Durch das Verschlußelement wird sichergestellt, daß das erfaßte Stabende bei der Querbewegung nicht vorzeitig aus der Ausnehmung herausfällt. Als Verschlußelement kommen Greifer oder eine die Ausnehmung auf ihrem Querweg von unten abschließende schalenförmige Bahn infrage.

Alternativ zu dem Ausheber können Querschieber und Stopper absenkbar ausgebildet sein, so daß der Ausheber durch die Beweglichkeit von Stopper und Querschieber ersetzt werden.

Der Querschieber hat die in Anspruch 2 erwähnten Endstellungen, wovon die eine in Verlängerung der Bahn des Aushebers befindliche dazu dient, den in der Vereinzelung befindlichen Stab aufzunehmen. Die Querbewegung trennt das Stabende endgültig von den verbleibenden Stabenden. In der zweiten Endstellung wird die Ausnehmung wieder freigegeben und das Stabende fällt auf die Transporteinrichtung.

Der mit Anspruch 3 verfolgte Initiator dient der Steuerung der Quertransporteinrichtung und stellt sicher, daß ständig mindestens ein Stab an dem Stopper anliegt.

Die Ausgestaltung der Anmeldung nach Anspruch 4 dient der baulichen Vereinfachung.

Nach einer bevorzugten Ausgestaltung der Erfindung ist vorgesehen, das Verschlußelement gem. Anspruch 5 auszubilden. Auch dieses Merkmal dient der baulichen Vereinfachung der Vereinzelungsvorrichtung.

Gleiches gilt für das Merkmal von Anspruch 6, da die Verschmutzungs- und Führungsprobleme von auf Kreisbahnen bewegten Maschinenelementen leichter beherrschbar sind und sich fertigungsmäßig einfacher gestalten.

0175845

---

- 4 -

Die Merkmale der Ansprüche 7 und 8  dienen der Anpassung der Vereinzelungsvorrichtung an unterschiedliche Werkstückdurchmesser.

Die mit Anspruch 9 verfolgte Ausführungsform der Erfindung  stellt eine einfache Lösung zur Sicherung der Lage des Stabendes auf dem Ausheber dar. Im Gegensatz dazu erfahren die eventuell darüber liegenden Stabenden diese seitliche Abstützung nicht. Beim Anheben  des auf dem Ausheber liegenden Stabendes  können die evtl. darüberliegenden Stabenden herunterfallen.

Bevorzugt ist eine Weiterbildung der Erfindung gem. Anspruch 10 vorgesehen, die ohne weiteren Aufwand den Vereinzelungsvorgang abschließt. Das Transportrollenpaar ist meistens ohnehin an den weiter verarbeitenden Maschinen vorgesehen, so daß diese Merkmale keinen speziellen baulichen Aufwand darstellen.

Die Erfindung wird im einzelnen anhand der Zeichnung näher erläutert. Dabei zeigen:

Fig. 1:    Eine Draufsicht auf die gesamte Vereinzelungsvorrichtung,

Fig. 2:    eine Stirnseitenansicht der Vereinzelungsvorrichtung,

Fig. 3:    einen Ausschnitt aus Fig.2 mit einem zangenförmigen Querschieber

- 5 -

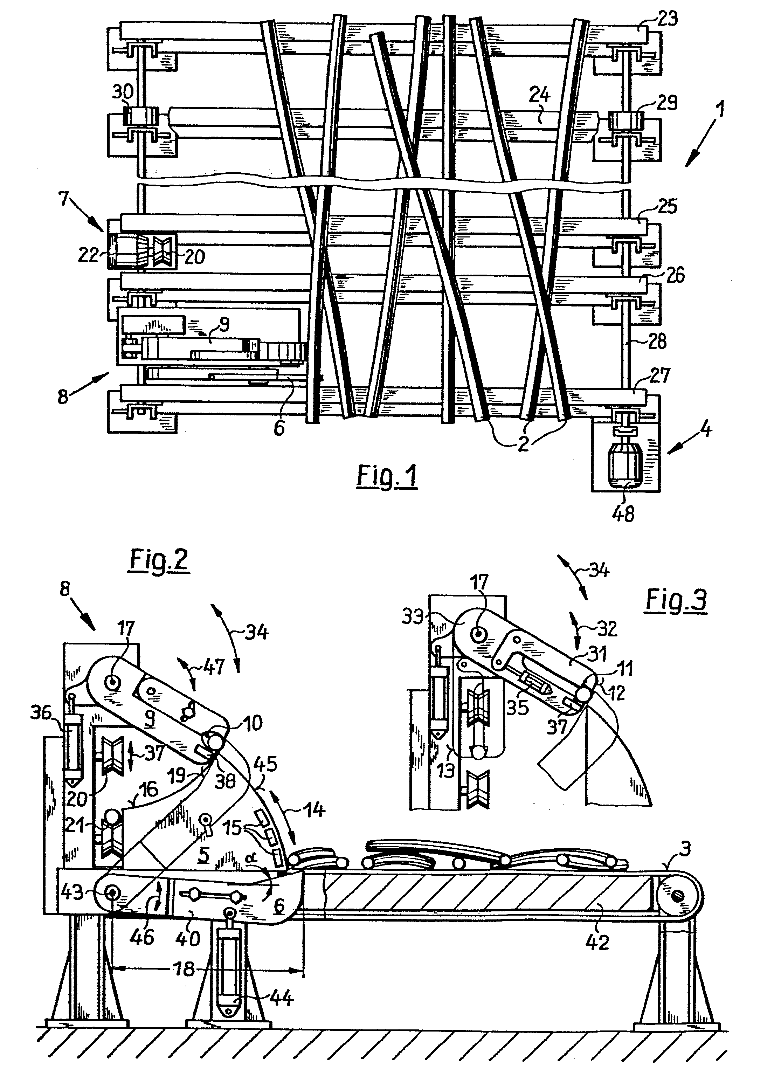

In Fig 1 ist mit 1 die Geamtheit der Vereinzelungsvorrichtung bezeichnet. Diese umfaßt einen Tisch 3, eine Transportvorrichtung 7 und eine Baugruppe 8, die die eigentliche Vereinzelung im wesentlichen ausführt.

Der Tisch 3 besteht aus einer Reihe von Transportbändern 23, 24, 25, 26, 27, die nebeneinander aufgereiht sind. Die Transportbänder sind über je ein Treibrad 29 und ein Losrad 30 aufgespannt und werden über ihre Länge von einem Träger 42 abgestützt. Die Treibräder werden über eine ihnen gemeinsame, alle verbindende Welle 28 und durch einen Motor 48 einer Transportvorrichtung 4 angetrieben. Auf dem Tisch liegt ein aufgelöstes Bund von Stäben 2. Die Stäbe liegen mit einer gewissen Unordnung auf dem Tisch. Sie werden von den Transportbändern nach und nach der Baugruppe 8, die zunächst nur die Stabenden vereinzelt, quer zu ihrer Längserstreckung zugeführt.

Die Baugruppe 8 ist an einem Längsende der Stäbe 2, bzw. an einer Stirnseite des Tisches 3 angeordnet. Sie erstreckt sich nur über einen kurzen Längsabschnitt der Stäbe 2. Sie umfaßt einen Stopper 5, gegen den die quertransportierten Stäbe mit ihren Längsenden zur Anlage kommen. Sobald ein erster Stab dort zur Anlage gekommen ist, signalisieren die Initiatoren 15 dessen Anwesenheit und leitet den Vereinzelungsvorgang ein. Durch die Anordnung der Initiatoren übereinander in der Brust 45 wird dieses Signal auch gegeben, wenn der erste ankommende Stab in der zweiten oder dritten Lage liegt. Die Initiatoren sind im unteren Bereich der Brust 45 angeordnet und erfassen einen Bereich dieser Brust, der ein Mehrfaches des größten vereinzelbaren Werkstückdurchmessers ausmacht. Unterhalb des Tisches ist ein als Schwenkhebel ausgebildeter <u>Ausheber</u> 6 angeordnet,

---

- 6 -

der auf seiner Bahn 14 das oder die zuerst am Stopper 5 anliegenden Stabenden nach oben an der Wand des Stoppers entlang anhebt. Der Ausheber ist als Schwenkhebel ausgebildet und bei 43 drehbar gelagert. Er hat eine veränderbare Länge 18 und wird von einem Zylinder 44 in Richtung des Pfeiles 46 bewegt. Die Länge 18 ist so gewählt, daß der Ausheber um Werkstückbreite vor dem Stopper entlangt fährt. An dem über den Stopper hinausragenden Ende hat der Ausheber 6 eine Auflagefläche 19, die in der in Fig. 1 gezeigten Ausgangsstellung 40 um einen Winkel (alpha) gegen den Schwenkradius um den Drehpunkt 43 geneigt ist. Der Winkel ist so ausgelegt, daß die Auflagefläche 19 mit der Brust 45 des Stoppers eine V-förmige Aufnahme für das zu vereinzelnde Stabende bildet und daß bei einer Ausführung gem Fig. 2 die Auflagefläche 19 am oberen Ende ihres Weges mit dem Kreissegment 16 fluchtet.

Zum Anheben durchgreift der Ausheber 6 den Tisch 3 von unten und schiebt ein oder mehrere übereinanderliegende Stabenden an der Brust 45 entlang.

Sobald das oberste Stabende in die im wesentlichen nach unten gerichtete Ausnehmung 10 des Querschiebers 9 gelangt, wird durch den Fühler 38 eine Beendigung des Anhebevorgangs eingeleitet.

Das in die Ausnehmung eingebrachte Stabende wird dort durch ein Verschlußelement 11 gehalten. Das Verschlußelement 11 kann als Zangenschenkel 31 ausgebildet sein, wie dies in Fig. 3 dargestellt ist, oder es wird durch ein Kreissegment 16 gebildet, daß am Stopper 5 vorgesehen ist und von diesem am Herausfallen aus der Ausnehmung des Querschiebers 9 gehindert. Der Zangenschenkel 31 wird von einem Zylinder 35 in Verbindung mit dem Fühler 37 gesteuert. Der Zangenschenkel 31 ist in Richtung des Pfeiles 32 schwenkbar. Der

---

- 7 -

gegenüber dem Querschieber beweglich angeordnete Zangenschenkel 31 ist oberhalb der Ausnehmung für das Stabende
angebracht und übernimmt somit zugleich die Funktion der
Anpassung der Ausnehmung an den Stabdurchmesser. Bei der in
Fig. 2 gezeigten Ausführung des Querschiebers wird diese
Anpassung an den Werkstückdurchmesser individuell gemäß
Pfeil 47 vorgenommen.Der Querschieber ist bevorzugt als
Schwinge 33 mit einem Drehpunkt 17 ausgebildet, der mit
Hilfe eines Zylinders 36 zwischen zwei Endstellungen 12 und
13 verschwenkt wird. Die erste Stellung 12 ist in den Fig. 2
und 3 in voll ausgezogenen Linien wiedergegeben und dient
der Aufnahme des einzeln zu erfassenden Stabendes. Auf dem
Schwenkweg gem. Pfeil 34 wird das Stabende von den übrigen
Enden der Stäbe 2 seitlich weggezogen.

Auch in der sich dann ergebenden zweiten Endlage 13 ist
die Ausnehmung 10 nach unten gerichtet, so daß das Stabende
aus der Ausnehmung nach unten auf eine Rolle 21 eines
Rollgangs herausfallen kann. Diese Rolle ist Teil einer
Transportvorrichtung 7, in dem dargestellten Umfang aus
einer weiteren Rolle 20 besteht, die gemäß Pfeil 39
absenkbar ist und der Rolle 21 genau gegenüber liegt. Die
zweite Rolle 20 wird von einem Motor 22 angetrieben. Dieses
Treibrollenpaar zieht den Stab mit seiner gesamten Länge auf
der dem restlichen Bund gegenüberliegenden Seite des Stoppers 5 aus dem Bund heraus und führt ihn einer nicht gezeigten, weiterverarbeitenden Maschine zu. Der Stab ist vereinzelt.

0175845

- 8 -

Patentansprüche:

1.) Vorrichtung (1) zum Vereinzeln von langen Drähten und
    Stäben (2) , die die folgenden Merkmale aufweist:
    a)   einen Tisch (3) ,
    b)   mindestens einen aus dem Tisch (3) herausragenden
         Stopper (5)
    c)   einen Ausheber (6), der um Werkstückbreite vor dem
         Stopper (5) versetzt arbeitet und der von unten
         Werkstücke auf das Niveau der Oberkante des Stoppers
         hebt,
    d)   eine Transportvorrichtung (7) hinter dem Stopper (5)

    gekennzeichnet durch die folgenden Merkmale:

    e)   eine Quertransporteinrichtung (4) für die Werkstücke
         auf dem Tisch (3)
    f)   nur eine Vereinzelungsvorrichtungs - Baugruppe (8) an
         einem Längsende der Drähte und Stäbe (2),
    g)   einen Querschieber (9) am oberen Ende der Bahn des
         Aushebers,
    h)   eine nach unten bzw. in Bewegungsrichtung des Aushebers (6) offene Ausnehmung (10) am Querschieber (9),
    i)   ein Verschlußelement (11) für die Öffnung des Quer-
         schiebers

2.) Vereinzelungsvorrichtung nach Anspruch 1, gekennzeichnet
    durch das folgende Merkmal:
    k)   die Ausnehmung des Querschiebers (9) hat zwei Endstellungen (12, 13), von denen die eine (12) in

- 9 -

Verlängerung der Bahn (14) des Aushebers (6) angeordnet ist,

3.) Vereinzelungsvorrichtung nach Anspruch 1, gekennzeichnet
durch das folgende Merkmal:
l)    ein oder mehrere Initiatoren (15) sind in den
Stopper (5) eingebaut und zeigen an, daß ein Stab an
dem Stopper (5) anliegt,

4.) Vereinzelungsvorrichtung nach Anspruch 1, gekennzeichnet
durch das folgende Merkmal:
m)    der Querschieber (9) ist als Schwinge ausgebildet,

5.) Vereinzelungsvorrichtung nach Anspruch 1, gekennzeichnet
durch das folgende Merkmal:
n)    das Verschlußelement (11) ist als obere Kante des
Stoppers (5) ausgebildet, über die der Querschieber (9) hinweg streicht,

6.) Vereinzelungsvorrichtung nach Anspruch 1, gekennzeichnet
durch das folgende Merkmal:
o)    der Ausheber (6) ist als Schwenkhebel ausgebildet und
der Stopper (5) im von dem Schwenkhebel überstrichenen Bereich als Kreissegment, (16) mit dem Drehpunkt (17) des Schwenkhebels als Mittelpunkt.

7.) Vereinzelungsvorrichtung nach Anspruch 1, gekennzeichnet
durch das folgende Merkmal:

**0175845**

- 10 -

p) die Ausnehmung (10) im Querschieber (9) ist in ihrer Größe veränderlich und dadurch dem Querschnitt der Werkstücke anpaßbar.

8.) Vereinzelungsvorrichtung nach Anspruch 1, gekennzeichnet durch das folgende Merkmal:

q) die Länge (18) des Schwenkhebels ist veränderbar und dadurch dem Stabdurchmesser anpaßbar.

9.) Vereinzelungsvorrichtung nach Anspruch 1, gekennzeichnet durch das folgende Merkmal:

r) die Auflagefläche (19) des Aushebers (6) ist in der Position auf Höhe des Tisches (3) um einen Winkel ($\alpha$) gegen den Schwenkradius des Aushebers (6) zum Stopper (5) hin geneigt und bildet mit dem Stopper eine V-förmige Aufnahme für den Stab.

10.) Vereinzelungsvorrichtung nach Anspruch 1, gekennzeichnet durch die folgenden Merkmale:

s) die Transportvorrichtung (7) hinter dem Stopper (5) besteht aus mindestens einem Paar einander gegenüberliegender Rollen (20, 21),

t) mindestens eine der beiden Rollen ist von einem Motor (22) drehangetrieben.

Fig. 1

Fig. 2

Fig. 3